# EUROPEAN PATENT APPLICATION

(11) **EP 4 653 996 A1**
(43) Date of publication of application: **26.11.2025**
(21) Application number: 23922281.3
(22) Date of filing: 31.08.2023
(51) Int. Cl.: G06F 3/06

(54) **STORAGE SYSTEM, DATA ACCESS METHOD, APPARATUS, AND DEVICE**

(30) Priority: 14.02.2023 CN 202310139956
(71) Applicant: Huawei Technologies Co., Ltd., Shenzhen, Guangdong 518129 (CN)
(72) Inventor: TAN, Chunhua, Shenzhen, Guangdong 518129 (CN)
(74) Representative: MERH-IP Matias Erny Reichl Hoffmann Patentanwälte PartG mbB
(86) International application number: PCT/CN2023/116127
(87) International publication number: WO 2024/169158

(57) **Abstract**

A storage system, a data access method and apparatus, and a device are provided. In this application, a storage system in a storage-compute decoupled architecture includes a computing node and a storage node. A hard disk in the storage node provides page-level storage space for the computing node, and a minimum allocation unit in the page-level storage space is defined as a logical chunk group. The computing node sends an access instruction to the storage node, where the access instruction carries a page identifier of a target page. The storage node parses out a logical chunk group identifier and an offset from the page identifier of the target page, where the offset indicates a location of the target page in a logical chunk group identified by the logical chunk group identifier; and accesses the target page based on the storage location to which the logical chunk group identifier and the offset point. The page identifier of the target page can directly point to the storage location of the target page. A data index may not be retained on a storage node side, to avoid occupying large storage space by the data index and effectively improve data access efficiency.

## Description

### CROSS-REFERENCE TO RELATED APPLICATIONS

This application claims priority to Chinese Patent Application No. 202310139956.9, filed with the China National Intellectual Property Administration on February 14, 2023 and entitled "STORAGE SYSTEM, DATAACCESS METHOD AND APPARATUS, AND DEVICE", which is incorporated herein by reference in its entirety.

### TECHNICAL FIELD

This application relates to the field of storage technologies, and in particular, to a storage system, a data access method and apparatus, and a device.

### BACKGROUND

A storage system can support block-level (block-level), file-level (file-level), and object-level (object-level) data access. In other words, the storage system can store data at a data granularity of a block, a file, or an object, and a user can access the data at a granularity of a block, a file, or an object. However, the data granularity of the block, the file, or the object is still excessively large. Therefore, the block, the file, or the object may be further refined. Usually, the block, the file, or the object is further split at a granularity of a page, and a data index is established at the data granularity of the page.

For example, a file system is deployed on the storage system, and a minimum allocation unit of logical storage space mapped by a hard disk in the storage system is an append only log (PLOG). When data needs to be written into a file stored in the storage system, page encoding (page identification, page ID) is represented by using an identifier of the file and an offset of the data in the file. The storage system allocates a storage location to the data, where the storage location may be represented by using a PLOG ID and an offset of the data in the PLOG. The storage system establishes a data index for the data, and stores the data index. The data index may indicate a mapping relationship between the page ID and the storage location.

If a large amount of data is stored in the storage system, a data amount of the data index stored in the storage system is large, and the large data index occupies large storage space in the storage system.

### SUMMARY

This application provides a storage system, a data access method and apparatus, and a device, to reduce storage space occupied by a data index and improve data access efficiency.

According to a first aspect, an embodiment of this application provides a storage system. The storage system is a storage system in a storage-compute decoupled architecture, and the storage system includes a computing node and a storage node. For the storage node, a hard disk in the storage node provides page-level storage space for the computing node, and a minimum allocation unit in the page-level storage space is a logical chunk group.

When the computing node needs to access a target page in the storage node, the computing node may send an access instruction to the storage node, where the access instruction carries a page identifier of the target page. The storage node receives the access instruction, and parses out a logical chunk group identifier and an offset from the page identifier of the target page, where the offset indicates a location of the target page in a logical chunk group identified by the logical chunk group identifier. The storage node accesses the target page based on the storage location to which the logical chunk group identifier and the offset point.

In the foregoing system, the page identifier of the target page carries the logical chunk group identifier and the offset, and can directly point to the storage location of the target page. When accessing the target page, the storage node does not need to establish a data index or query a data index, but directly accesses the target page from the storage location of the target page. The data index may not be retained on a storage node side, to avoid occupying large storage space by the data index and effectively improve data access efficiency.

In a possible implementation, the access instruction may be a data read instruction used to request to read the target page. When accessing the target page, the storage node may read the target page based on the storage location to which the logical chunk group identifier and the offset point, and feed back the target page to the computing node.

In the foregoing system, when reading the target page, the storage node may directly and quickly determine the storage location of the target page based on the logical chunk group identifier and the offset, to read the target page from the storage location. In this process, the data index does not need to be queried, to ensure a data reading speed, so that the target page can be efficiently fed back to the computing node.

In a possible implementation, the access instruction is a data write instruction used to request to write the target page, and the data write instruction further carries the target page. When accessing the target page, the storage node may write the target page into the storage location to which the logical chunk group identifier and the offset point.

In the foregoing system, when storing the target page, the storage node may directly and quickly determine the storage location of the target page based on the logical chunk group identifier and the offset, to store the target page at the storage location. In this process, the data index does not need to be established for the target page, to ensure a data write speed.

In a possible implementation, when the target page needs to be read, the computing node may first search a local memory for the target page. If the target page is not found in the memory of the computing node based on the page identifier of the target page, the computing node may initiate an access instruction to the storage node, to request to read the target page.

In the foregoing system, the target page may be preferentially stored in the memory of the computing node. When an amount of data in the memory reaches a specific threshold or another triggering condition is met, the computing node migrates the page in the memory to the storage node. Such a storage manner can ensure that when the computing node needs to read the target page, there is a probability that the computing node can quickly search the local memory for the target page. If the target page is not found in the local memory, the computing node may obtain the target page from the storage node, to ensure that the computing node can finally obtain the target page.

In a possible implementation, the page identifier of the target page is allocated by the storage node. The computing node may send a page application request to the storage node, where the target page application request is used to request to obtain the page identifier of the target page. The computing node obtains the page identifier of the target page fed back by the storage node. When the target page needs to be written (that is, the target page needs to be stored), the page identifier may be allocated to the target page.

In the foregoing system, the page identifier of the target page is allocated by the storage node, so that the page identifier of the target page can carry the logical chunk group identifier and the offset, to avoid consuming large storage space by the storage node to store the data index.

In a possible implementation, after receiving the page application request, the storage node addresses the logical chunk group identifier and the offset as the page identifier of the target page, and feeds back the page identifier of the target page to the computing node.

In the foregoing system, the storage node may feed back the page identifier of the target page upon a request of the computing node, so that the computing node does not need to configure the page identifier of the target page.

In a possible implementation, when the hard disk in the storage node is a PLOG disk, the logical chunk group may be a PLOG, and the logical chunk group identifier is a PLOG identifier. When the hard disk in the storage node is a hard disk of another type, the logical chunk group may be designed based on an actual scenario.

In the foregoing system, the logical chunk group has a plurality of possible implementations, and is applicable to different application scenarios.

In a possible implementation, the data write instruction carries pages that belong to a same logical chunk group and that are buffered in the memory of the computing node and page identifiers of the pages, and the pages belonging to the same logical chunk group includes the target page.

In the foregoing system, when the computing node initiates the data write instruction to the storage node, a plurality of pages may be written in batches. For example, the pages belonging to the same logical chunk group may be written into the storage node, to improve data write efficiency.

According to a second aspect, an embodiment of this application provides a data access method. The method may be jointly performed by a computing node and a storage node in a storage system. For beneficial effects, refer to related descriptions in the first aspect and any possible implementation of the first aspect. Details are not described herein again.

The computing node sends an access instruction to the storage node, where the access instruction carries a page identifier of a target page.

After receiving the access instruction, the storage node parses out a logical chunk group identifier and an offset from the page identifier of the target page, where the offset indicates a location of the target page in a logical chunk group identified by the logical chunk group identifier, where a hard disk in the storage node provides page-level storage space for the computing node, and the logical chunk group is a minimum allocation unit in the page-level storage space.

The storage node accesses the target page based on the storage location to which the logical chunk group identifier and the offset point.

In a possible implementation, the access instruction is a data read instruction, and the data read instruction is used to request to read the target page. When accessing the target page, the storage node reads the target page based on the storage location to which the logical chunk group identifier and the offset point, and feeds back the target page to the computing node.

In a possible implementation, the access instruction is a data write instruction, the data write instruction is used to request to write the target page, and the data write instruction further carries the target page. When accessing the target page, the storage node may write the target page into the storage location to which the logical chunk group identifier and the offset point.

In a possible implementation, when the target page needs to be read, the computing node finds the target page in a memory of the computing node based on the page identifier of the target page; and if the target page is not found in the memory, the computing node sends the data read instruction to the storage node.

In a possible implementation, the computing node sends a page application request to the storage node, where the target page application request is used to request to obtain the page identifier of the target page. The computing node obtains the page identifier of the target page fed back by the storage node.

When the target page needs to be written, the computing node allocates the page identifier to the target page.

In a possible implementation, after receiving the page application request, the storage node addresses the logical chunk group identifier and the offset as the page identifier of the target page, and feeds back the page identifier of the target page to the computing node.

In a possible implementation, the logical chunk group is a PLOG, and the logical chunk group identifier is a PLOG identifier.

In a possible implementation, the data write instruction carries pages that belong to a same logical chunk group and that are buffered in the memory of the computing node and page identifiers of the pages, and the pages belonging to the same logical chunk group includes the target page.

According to a third aspect, this application further provides a computing device. The computing device may be the computing node, the storage node, or a point in the method instance in the first aspect and the possible implementations of the first aspect. A storage is configured to store computer program instructions. A processor has a function of implementing behavior of the computing node or the storage node in the method instance according to any one of the first aspect or the possible implementations of the first aspect. For beneficial effects, refer to the descriptions of the first aspect. Details are not described herein again.

According to a fourth aspect, an embodiment of this application further provides a data access apparatus. The data access apparatus has a function of implementing behavior of the storage node in the method instance of the second aspect. For beneficial effects, refer to the descriptions of the first aspect. Details are not described herein again. The function may be implemented by hardware, or may be implemented by executing corresponding software by hardware. The hardware or software includes one or more modules corresponding to the foregoing functions. In a possible design, a structure of the apparatus includes a first transmission module and an access module. These modules may perform corresponding functions of the storage node in the method example of the second aspect. For details, refer to the detailed descriptions in the method example. Details are not described herein again.

According to a fifth aspect, an embodiment of this application further provides a data access apparatus. The data access apparatus has a function of implementing behavior of the computing node in the method instance of the second aspect. For beneficial effects, refer to the descriptions of the first aspect. Details are not described herein again. The function may be implemented by hardware, or may be implemented by executing corresponding software by hardware. The hardware or software includes one or more modules corresponding to the foregoing functions. In a possible design, a structure of the apparatus includes a second transmission module and a processing module. These modules may perform corresponding functions of the computing node in the method example of the second aspect. For details, refer to the detailed descriptions in the method example. Details are not described herein again.

According to a sixth aspect, this application further provides a computer-readable storage medium. The computer-readable storage medium stores instructions. When the instructions are run on a computer, the computer is enabled to perform the method according to the second aspect and the possible implementations of the second aspect.

According to a seventh aspect, this application further provides a computer program product including instructions. When the computer program product is run on a computer, the computer is enabled to perform the method according to the second aspect and the possible implementations of the second aspect.

According to an eighth aspect, this application further provides a computer chip. The chip is connected to a storage, and the chip is configured to: read and execute a software program stored in the storage, to perform the method according to the second aspect and the possible implementations of the second aspect.

### BRIEF DESCRIPTION OF DRAWINGS

FIG. 1 is a diagram of a logical chunk group according to this application;
FIG. 2A and FIG. 2B each are a diagram of an architecture of a storage system according to this application;
FIG. 3 is a diagram of a data access method according to this application;
FIG. 4A and FIG. 4B are diagrams of architectures of storage system clusters according to this application; and
FIG. 5 and FIG. 6 are diagrams of structures of data access apparatuses according to this application.

### DESCRIPTION OF EMBODIMENTS

Before a storage system, a data access method and apparatus, and a device that are provided in embodiments of this application are described, a minimum allocation unit of logical storage space in this application is first described.

In embodiments of this application, a hard disk in a storage node may provide page-level storage space for a computing node, in other words, the hard disk in the storage node may store data at a page-level granularity. A minimum allocation unit in the page-level storage space is referred to as a logical chunk group. The storage system includes a plurality of hard disks. A physical address of storage space provided by the hard disk is not directly exposed to a user. The storage system may map, to the page-level storage space (where this is actually logical storage space), physical storage space provided by the hard disk. The hard disk may be a solid-state drive, a mechanical hard disk, or a hard disk of another type.

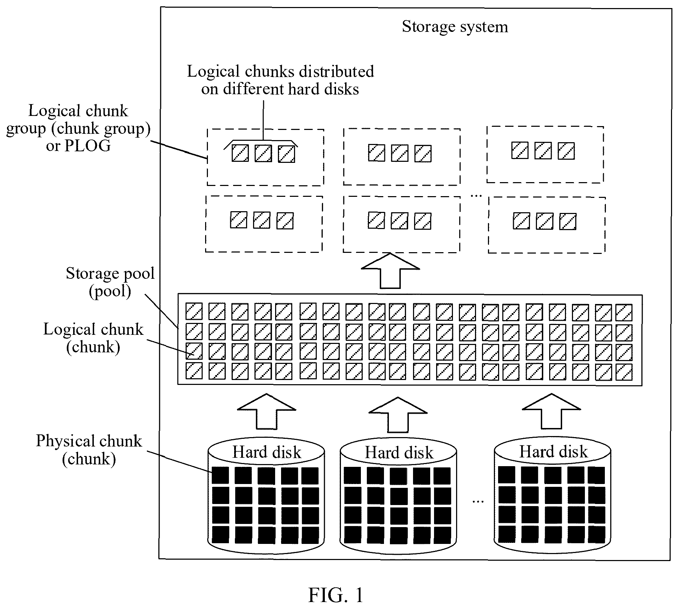

As shown in FIG. 1, each hard disk is divided into several physical chunks (chunks). These physical chunks may be mapped into logical chunks. These logical chunks may form a storage pool. The storage pool is used to provide page-level storage space for an upper layer. The page-level storage space is actually from physical storage space of hard disks included in a storage system. Of course, not all disks in the storage system need to provide space for the storage pool. In actual application, logical chunks mapped from physical chunks in the hard disks in the storage system may form one or more storage pools, and page-level storage space provided by any storage pool is from some or all hard disks. A plurality of logical chunks from different disks form a logical chunk group (chunk group, CKG). A logical chunk group is a minimum allocation unit of the storage pool.

In the storage system, when data needs to be stored, storage space is first applied for from the storage pool. The storage pool may provide one or more logical chunk groups for storing the data.

A quantity of logical chunks included in a logical chunk group depends on a mechanism (also referred to as a redundancy mechanism) used to ensure data reliability. Usually, to ensure the data reliability, the storage system uses a multi-copy mechanism or an erasure coding (erasure coding, EC) check mechanism to store the data. The multi-copy mechanism means that at least two identical data copies are stored. When one data copy is lost, another data copy can be used for restoration. If the multi-copy mechanism is used, one logical chunk group includes at least two chunks, and each chunk is located on a different disk. In the EC check mechanism, to-be-stored data is divided into at least two data fragments, parity fragments of the at least two data fragments are calculated according to a specific check algorithm. When one data fragment is lost, another data fragment and the parity fragments may be used for data restoration. If the EC check mechanism is used, one logical chunk group includes at least three chunks, and each chunk is located on a different hard disk.

Actually, a PLOG may be a special "logical block group", and an SSD that can expose a PLOG identifier (ID) to a host is referred to as a PLOG SSD for short. In a storage system with a hard disk of a PLOG SSD, data is stored in a "pre-write log" manner. To be specific, when the data is written into the storage system, only appending is supported, and stored data cannot be directly modified.

A scenario in which a minimum allocation unit of page-level storage space in a storage-compute decoupled storage system (where the storage system includes a computing node configured to undertake a computing function and a storage node configured to undertake a storage function) is a PLOG is used as an example to describe an existing manner of accessing the storage system at a granularity of a page.

In a procedure of accessing the storage system at a granularity of a page, operations on a page include page allocation, page write, and page read.

Page allocation is allocation of a page ID. The computing node in the storage system can implement page ID allocation, and the computing node may construct one or more page IDs. The computing node may use an identifier of a file to which the page belongs and an offset of the page in the file as the page ID.

Page write is writing data at a granularity of a page. In embodiments of this application, for brevity of description, data that needs to be written during page writing is referred to as a page, in other words, the page is used to represent the data that needs to be written. Page write operations are divided into a page write operation on a computing node side and a page write operation on a storage node side.

When determining that a page needs to be written, the computing node first buffers the page in a memory of the computing node, and stores the page ID. This process is the page write operation on the computing node side. The computing node may periodically migrate a page buffered in a buffer to the storage node.

After obtaining the page sent by the computing node, the storage node performs the page write operation on the storage node side. The storage node first buffers the page in a memory of the storage node, and stores the page ID.

When a data amount of the page buffered in the memory of the storage node reaches a threshold or another factor is triggered, the storage node may make the page buffered in the memory persistent to a persistent storage (for example, a hard disk). This process may be referred to as disk flushing for short.

A processing logic of disk flushing is as follows: The storage node first applies for a segment of storage space from the storage pool as storage space of the page. The storage space may be represented by a PLOG ID and an offset (offset) of the page in a PLOG. The page may be stored in the storage space. The storage node further establishes a mapping relationship between the page ID and an address of the storage space (that is, PLOG ID+offset). The mapping relationship is stored in the storage node as a data index.

Page read is reading data at a granularity of a page. In embodiments of this application, for brevity of description, data that needs to be read during page reading is referred to as a page, in other words, the page is used to represent the data that needs to be read.

When determining that the page needs to be read, the computing node first searches the memory of the computing node for the page based on the page ID. If the page is found in the memory of the computing node, in other words, the page is hit in the memory, the computing node reads the page from the memory.

If the page is not found in the memory of the computing node, the computing node initiates a data read instruction to the storage node, where the data read instruction carries the page ID. After receiving the data read instruction, the storage node first searches a buffer of the storage node for the page based on the page ID. If the page is found in the buffer of the storage node, the storage node may feed back the hit page to the computing node.

If the page is not found in the buffer of the storage node, the storage node searches for a data index based on the page ID, and determines an address of storage space to which the page ID is mapped. Then, the storage node reads the page from the hard disk based on the address of the storage space, and the storage node may feed back the hit page to the computing node.

According to the foregoing descriptions of operations on the page, a data index needs to be established and stored in the storage system. When the storage system stores a large amount of data, a data amount of the data index also increases, and large storage space of the storage system is occupied. In processes of establishing the data index and page reading, searching for the data index also consumes a large amount of computing power of a processor in the storage node.

In embodiments of this application, page allocation in the storage system may be performed by the storage node, a page identifier allocated by the storage node carries a logical chunk group identifier and an offset, and the storage node provides the page identifier for the computing node. When the computing node needs to access the page in the storage node, the computing node only needs to send an access instruction carrying the page identifier, and the storage node may access the target page based on a storage location (where the storage location is storage space in the page-level storage space) to which the logical chunk group identifier and the offset that are in the page identifier point. Specifically, for the storage node, when disk flushing is performed, the storage node directly determines the logical chunk group identifier and the offset based on the page identifier, that is, determines the address of the storage space. The storage node may store the data in the storage space. Because the page identifier carries the logical chunk group identifier and the offset, the storage node does not need to establish a data index in a disk flushing process, to effectively save storage space in the storage system. When the storage node reads the page, storage space in which the page is located can be determined only by parsing the page identifier. In this process, the storage node does not need to search for the data index, so that occupation of the processor in the storage node can be reduced.

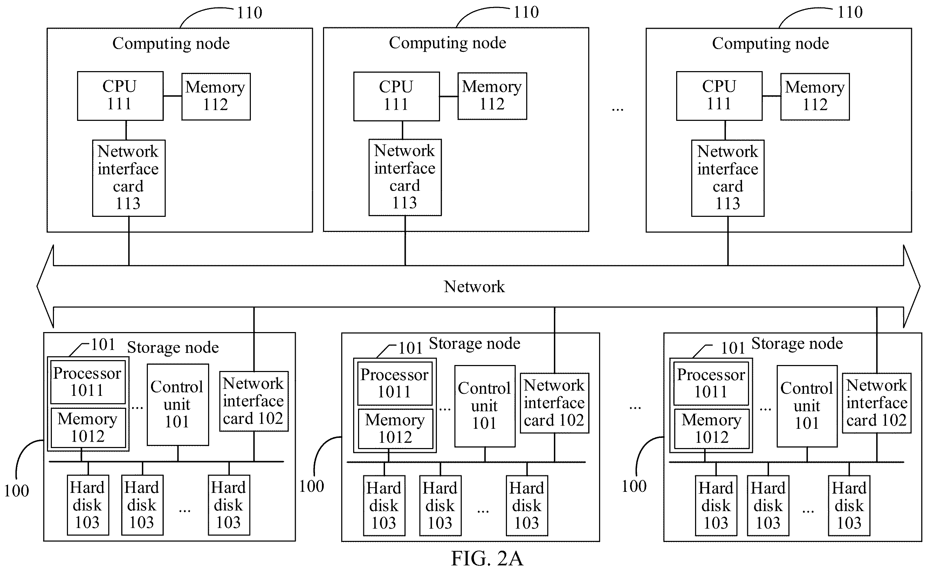

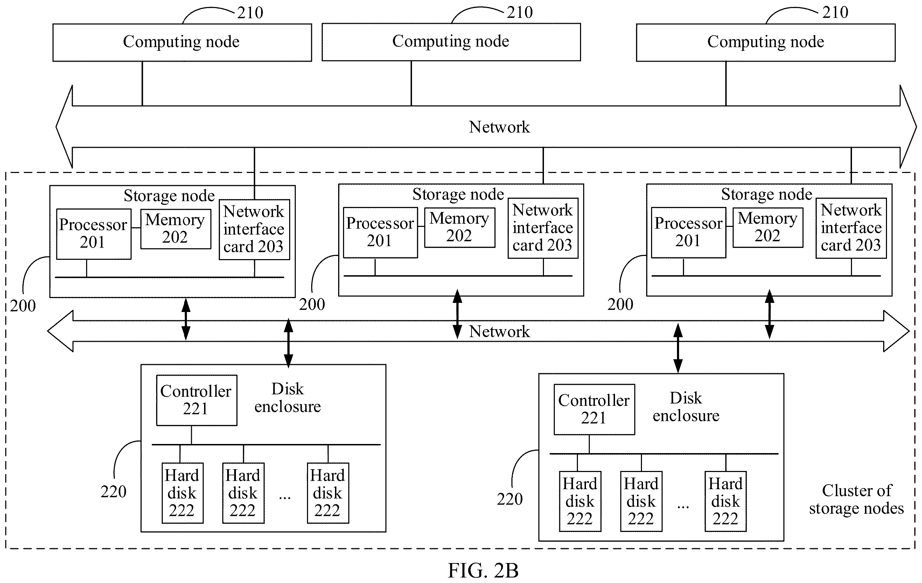

The data access method provided in embodiments of this application is applicable to a storage system in a storage-compute decoupled architecture. The "storage-compute decoupled" means that two different nodes are independently disposed in the storage system to respectively implement a computing function and a storage function. The following describes two storage systems in a storage-compute decoupled architecture based on FIG. 2A and FIG. 2B. The storage systems shown in FIG. 2A and FIG. 2B are merely examples. The data access method provided in embodiments of this application is also applicable to another storage system in the storage-compute decoupled architecture.

FIG. 2A shows a storage system according to an embodiment of this application. The storage system shown in FIG. 2A is a distributed storage system.

In FIG. 2A, the storage system includes a cluster of computing nodes and a cluster of storage nodes. The cluster of computing nodes includes one or more computing nodes 110 (where FIG. 2A shows two computing nodes 110, but is not limited to two computing nodes 110). The computing nodes 110 may communicate with each other. The computing node 110 is a computing device like a server, a desktop computer, or a controller of a storage array.

In terms of functions, the computing node 110 undertakes a computing function of the storage system, and the computing node 110 can perform computing or processing on data, for example, processing operations such as metadata management, deduplication, and data compression. In this embodiment of this application, the computing node 110 can apply for a page from a storage node 100, obtain a page identifier, and store the page identifier. The page identifier carries a logical chunk group identifier and an offset.

When data needs to be written into the storage system, the computing node 110 may allocate the page identifier obtained from the storage node 100 to the page (where the written data is the page), first store the page in a memory 112 of the computing node 110, and record the page identifier of the page. Subsequently, the computing node 110 may further migrate the page in the memory 112 to the storage node 100.

When data needs to be read from the storage system, the computing node 110 first queries the page in the memory 112 of the computing node 110 based on the page identifier of the page (where the page is the data that needs to be read). If the page is found in the memory 112, the computing node 110 reads the page from the memory 112. If the page is not found in the memory 112, the computing node 110 initiates a data read instruction to the storage node 100. The data read instruction carries the page identifier, and is used to request to obtain the page from the storage node 100. After obtaining the page from the storage node 100, the computing node 110 may feed back the page.

In terms of hardware, as shown in FIG. 2A, the computing node 110 includes at least a processor 111, the memory 112, and a network interface card 113. The processor 111 is a central processing unit (central processing unit, CPU), and is configured to process a data access request from the outside of the computing node 110 or a request generated inside the computing node 110. In FIG. 2A, an example in which the processor 111 is a CPU 111 is used for presentation. In this embodiment of this application, the processor 111 can obtain the page identifier from the storage node 100. When the page needs to be written, the page identifier is allocated to the page, and the page is buffered in the memory 112. A data write instruction may further be sent to the storage node 100, to migrate the page buffered in the memory to the storage node 100. When the page needs to be read, the processor 111 may first search the memory 112 for the page that needs to be read. If the page is not found in the memory 112, the processor 111 may send a data read instruction to the storage node 100, to obtain the page from the storage node 100. FIG. 2A shows only one CPU 111. In actual application, there are usually a plurality of CPUs 111, and one CPU 111 has one or more CPU cores. A quantity of CPUs and a quantity of CPU cores are not limited in this embodiment.

The CPU 111, the memory 112, and the network interface card 113 are connected through a bus, and the bus may be a peripheral component interconnect express (peripheral component interconnect express, PCIe) bus, or may be a compute express link (compute express link, CXL) bus, a universal serial bus (universal serial bus, USB) protocol bus, or another protocol bus.

The memory 112 is an internal memory that directly exchanges data with the CPU 111. The memory includes at least one type of storage. For example, the memory may be a random access memory, or may be a read-only memory (read-only memory, ROM). For example, the random access memory is a dynamic random access memory (dynamic random access memory, DRAM) or a storage class memory (storage class memory, SCM). The memory 112 may further include another random access memory, for example, a static random access memory (static random access memory, SRAM) or a read-only memory. The read-only memory may be a programmable read-only memory (programmable read-only memory, PROM), an erasable programmable read-only memory (erasable programmable read-only memory, EPROM), or the like. The memory 112 may alternatively be a dual in-line memory module or a dual in-line memory module (Dual In-line Memory Module, DIMM), or may be a solid-state drive (Solid-State Drive, SSD).

In this embodiment of this application, the page may be buffered in the memory 112, and the page identifier of the page may be stored. The page identifier carries the logical chunk group identifier and the offset.

The network interface card 113 is configured to communicate with the storage node 100. For example, the computing node 110 may send the page and the page identifier in a buffer to the storage node 100 via the network interface card 113, so that the storage node 100 can store the page and persistently store data on the page. For another example, the computing node 110 may send the data read instruction to the storage node 100 via the network interface card 113. The data read instruction carries the page identifier, and is used to request to obtain the data on the page from the storage node 100.

In addition, the computing node 110 may further include a bus used for communication between components inside the computing node 110. In terms of functions, because a main function of the computing node 110 in FIG. 2A is for a computing service, the storage node 100 may be used to implement persistent storage during data storage. In an actual implementation, the computing node 110 may alternatively have a few built-in hard disks, or may be externally connected to a few hard disks.

Any computing node 110 may access any storage node 100 in a cluster of storage nodes 100 through a network. The cluster of storage nodes 100 includes a plurality of storage nodes 100 (where FIG. 2A shows three storage nodes 100, but is not limited to three storage nodes 100).

In terms of functions, the storage node 100 undertakes a storage function of the storage system, and is mainly configured to store data. In this embodiment of this application, the storage node 100 can perform a page allocation operation, and may provide the page identifier for the computing node 110 upon application of the computing node 110. The page identifier provided by the storage node 100 carries the logical chunk group identifier and the offset, and the page identifier can directly point to a storage location of the page.

The storage node 100 can further store the page obtained from the computing node 110. For the storage node 100, the storage node 100 may first store the page in a memory 1012 of the storage node. When a data amount of the page in the memory 1012 of the storage node 100 reaches a threshold, the storage node 100 may make the page in the memory 1012 persistent to a hard disk 103. When making the page in the memory 1012 persistent to the hard disk 103, the storage node 100 may determine the logical chunk group identifier and the offset based on the page identifier. The logical chunk group identifier and the offset point to the storage location of the page, and the storage node 100 may store the page at the storage location.

When the storage node 100 receives the data read instruction that is from the computing node 110 and that carries the page identifier, the computing node 110 first queries the page in the memory 1012 of the storage node 100 based on the page identifier. If the page is found in the memory 1012, the storage node 100 feeds back the page to the computing node 110. If the page is not found in the memory 1012, the storage node 100 may determine the logical chunk group identifier and the offset based on the page identifier, and read the page from the storage location to which the logical chunk group identifier and the offset point. The storage node 100 feeds back the page to the computing node 110.

In terms of hardware, one storage node 100 includes one or more control units 101, a network interface card 102, and a plurality of hard disks 103. The network interface card 102 is configured to communicate with the computing node 110. The hard disk 103 is configured to store data, and may be a magnetic disk or another type of storage medium, for example, a solid-state drive or a shingled magnetic recording hard disk. The control unit 101 can provide a page identifier for the storage node 110, and the control unit 101 can further write a page into the hard disk 103 or read a page from the hard disk 103 based on a data read/write instruction sent by the computing node 110. In a data read/write process, the control unit 101 can parse out a logical chunk group identifier and an offset based on a page identifier carried in a data read/write request. The control unit 101 reads the page based on the logical chunk group identifier and the offset, to request to store the page.

In FIG. 2A, there is a strict homing relationship between the storage node 100 and the hard disk 103. The storage node 100 can access only the hard disk 103 in the storage node 100, and cannot access a hard disk 103 in another storage node 100.

The control unit 101 includes a processor 1011 and the memory 1012. The processor 1011 is configured to perform operations such as page allocation and data reading and writing. The memory 1012 is configured to temporarily store a page to be written into the hard disk 103, or read, from the hard disk 103, a page to be sent to the computing node 110. A specific type of the processor 1011 in the control unit 101 is not limited in this embodiment of this application. For example, the processor may be a processing chip like a CPU, a data processing unit (data processing unit, DPU), a graphics processing unit (graphics processing unit, GPU), or an embedded neural-network processing unit (neural-network processing unit, NPU). Usually, there may be one control unit 101 or two or more control units 101. When the storage node 100 includes at least two control units 101, there is a homing relationship between the hard disk 103 and the control unit 101, and each controller can access only a hard disk that belongs to the controller.

FIG. 2B shows another storage system according to an embodiment of this application. In FIG. 2B, the storage system includes a cluster of computing nodes and a cluster of storage nodes. The cluster of computing nodes includes one or more computing nodes 210. A function and a hardware structure of the computing node 210 in FIG. 2B are similar to the function and the hardware structure of the computing node 110 in FIG. 2A. For details, refer to the foregoing descriptions. Details are not described herein again.

Any computing node 210 may access any storage node 200 in a cluster of storage nodes 200 through a network. The cluster of storage nodes 200 includes a plurality of storage nodes 200 (where FIG. 2A shows three storage nodes 200, but is not limited to three storage nodes 200) and one or more disk enclosures 220.

A function of the storage node 200 in FIG. 2B is similar to the function of the storage node 200 in FIG. 2B. For details, refer to the foregoing descriptions. Details are not described herein again.

In terms of hardware, one storage node 200 includes a processor 201, a memory 202, and a network interface card 203. The network interface card 203 is configured to communicate with the computing node 210. The processor 201 can provide a page identifier for the computing node 210, and the processor 201 can further write a page into the disk enclosure 220 or read a page from the disk enclosure 220 based on a data read/write instruction sent by the computing node 210. In a data read/write process, the processor 201 can parse out a logical chunk group identifier and an offset based on the page identifier carried in the data read/write instruction, and read the page based on the logical chunk group identifier and the offset.

The memory 202 is configured to temporarily store a page to be written into the disk enclosure 220, or read, from the disk enclosure 220, a page to be sent to the computing node 210. A specific type of the processor 201 is not limited in this embodiment of this application. For example, the processor 201 may be a processing chip like a CPU, a DPU, a GPU, or an NPU.

The storage system shown in FIG. 2B is a distributed storage system with disk and controller separation. In the storage system, the storage node 200 may not have a slot of a hard disk 222, the hard disk 222 needs to be placed in the disk enclosure 220, and the storage node 200 may communicate with the disk enclosure 220 through the network. In the storage system, any storage node 200 can communicate with each disk enclosure 220. In other words, for any storage node, a hard disk 222 in each disk enclosure 220 may be considered as a hard disk 222 of the storage node 200.

The disk enclosure 220 can read a page from the hard disk 222 or store a page in the hard disk 222 upon an indication of the storage node. For example, when the storage node needs to make a page buffered in a memory persistent to the hard disk 222, the storage node 200 sends a write instruction to the disk enclosure 220, where the write instruction carries the page and a page identifier. After the disk enclosure 220 receives the write instruction, the disk enclosure 220 determines, based on the page identifier, to parse out a logical chunk group identifier and an offset that can be identified by the hard disk 222, to indicate the hard disk 222 to store the page. For another example, when the storage node needs to read the page from the hard disk 222, the storage node sends a read instruction to the hard disk enclosure 220, where the write instruction carries the page identifier. After the disk enclosure 220 receives the read instruction, the disk enclosure 220 determines, based on the page identifier, to parse out the logical chunk group identifier and the offset, and obtains the page from the hard disk 222 based on the logical chunk group identifier and the offset.

The disk enclosure 220 includes a controller 221 and several hard disks 222. The controller 221 may have a plurality of forms. In one case, the disk enclosure 220 belongs to a smart disk enclosure, and the controller 221 includes a CPU and a memory. The CPU is configured to perform operations such as reading and writing data. The memory is configured to temporarily store a page to be written into the hard disk 222, or read, from the hard disk 222, a page to be sent to the controller. In another case, the controller 221 is a programmable electronic component, for example, a DPU. Optionally, the DPU herein may be replaced with a processing chip like a GPU or an NPU. In another implementation, a function of the controller 221 may be offloaded to a network interface card. In other words, in this implementation, the disk enclosure 220 does not have the controller 221 inside, but the network interface card completes data reading and writing, address translation, and another computing function. In this case, the network interface card is an intelligent network interface card. The network interface card may be configured to perform operations such as reading and writing data.

Deployment locations of the storage node 200 and the computing node 210 are not limited in the storage system shown in FIG. 2B. For example, the storage node 200 and the computing node 210 may be deployed in a same cabinet, or may be deployed in different cabinets.

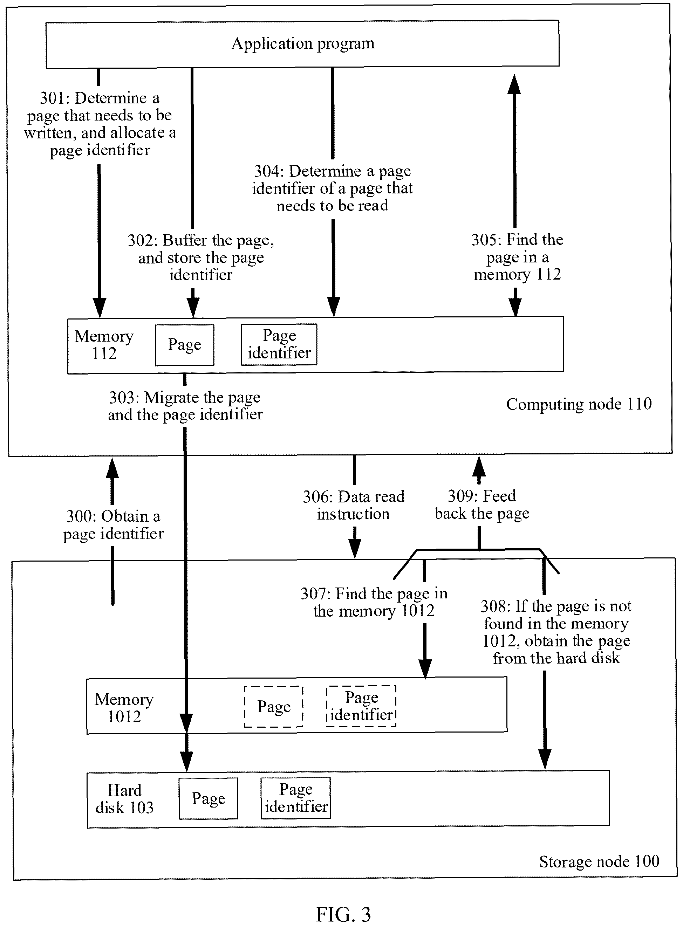

The following uses the storage system shown in FIG. 2A as an example to describe the data access method provided in embodiments of this application. Refer to FIG. 3, a data access method provided in an embodiment of this application includes a page write procedure (refer to step 301 to step 303) and a page read procedure (refer to step 304 to step 306).

Step 300: A computing node 110 obtains a page identifier from a storage node 100.

In this embodiment of this application, the computing node 110 no longer allocates the page identifier, but obtains the page identifier from the storage node 100. The storage node 100 may construct the page identifier based on a logical chunk group identifier and an offset, where the offset is an offset of a distance between a page and a start location of a logical chunk group. The logical chunk group identifier and the offset point to a segment of storage space (or may be understood as that the logical chunk group identifier and the offset point to a storage location of data, and the storage location is the storage space). The page identifier constructed in this way carries the logical chunk group identifier and the offset. Actually, the page identifier may be considered as an address of the storage space.

When performing step 300, the computing node 110 may send a page application request to the storage node 100. The page application request is used to request to obtain the page identifier. Optionally, the page application request may further carry a quantity of page identifiers that need to be applied for.

After the storage node 100 receives the page application request, the storage node 100 finds an idle logical chunk group (that is, a logical chunk group that does not store data or a logical chunk group whose data is not saturated). For the idle logical chunk group, the storage node 100 divides the idle logical chunk group into a plurality of segments of storage space at a granularity of a page size, and a size of each segment of storage space is a size of one page. For any storage space, a distance between a start location of the storage space and the start location of the logical chunk group is the offset, and an address of the storage space may be identified as the logical chunk group identifier and the offset.

The storage node 100 may feed back the page identifier to the computing node 110. If the page application request carries the quantity of page identifiers that need to be applied for, the storage node 100 may feed back a page identifier that meets a quantity requirement. If the page application request does not carry the quantity of page identifiers that need to be applied for, a default value may be set on a storage node 100 side, in other words, the storage node 100 feeds back, to the computing node 110 each time, page identifiers whose quantity is equal to the default value. Alternatively, the storage node 100 may determine, based on a quantity of currently idle logical chunk groups, a quantity of page identifiers fed back to the computing node 110. For example, if there are a small quantity of idle logical chunk groups, the storage node 100 may feed back a small quantity of page identifiers, for example, the quantity of page identifiers is equal to a first value. If there are a large quantity of idle logical chunk groups, the storage node 100 may feed back a large quantity of page identifiers, for example, the quantity of page identifiers is equal to a second value. The first value is less than the second value.

The computing node 110 may obtain one or more page identifiers from the storage node 100 in advance. When a new page needs to be written into the storage system, the computing node 110 may select a page identifier from the one or more page identifiers obtained in advance, and allocate the page identifier to the new page that needs to be written. Alternatively, when a new page needs to be written into the storage system, the computing node 110 may obtain a page identifier from the storage node 100 in real time, and allocate the page identifier to the new page that needs to be written.

The computing node 110 may maintain a page identifier pool, and the page identifier pool buffers the one or more page identifiers obtained by the computing node 110 from the storage node 100 in advance. When a new page needs to be written into the storage system, the computing node 110 may select a page identifier from the page identifier pool, to allocate the page identifier to the new page. As different pages are written into the storage system, page identifiers that are not allocated in the page identifier pool gradually decrease. When a quantity of page identifiers that are not allocated in the page identifier pool is less than a specified value, the computing node 110 may obtain one or more page identifiers from the storage node 100, and add the obtained page identifiers to the page identifier pool.

Step 301: The computing node 110 determines a page that currently needs to be written, and allocates a page identifier to the page.

In an actual application scenario, a user interacts with the storage system by using an application server, and accesses the storage system. For example, in a database scenario, a client program of a database is run on the application server. For another example, in a file management scenario, the application server has a client program for file management.

Correspondingly, a corresponding application program is deployed on the computing node 110, to interact with the application server, and receive data that needs to be written by the user or determine data that needs to be read by the user. For example, in the database scenario, the application program deployed on the computing node 110 may be a database management program, and the database management program can parse a request from the application server, to determine a page that needs to be written (when the request from the application server indicates to write data) or a page that needs to be read (when the request from the application server indicates to read data). The corresponding application program is deployed on the computing node 110, and may be run on a processor of the computing node 110.

When determining that a page needs to be written, the application program on the computing node 110 allocates a page identifier to the page. The page identifier is obtained from the storage node 100.

Step 302: The computing node 110 buffers the page in a memory 112, and stores the page identifier.

The computing node 110 may temporarily buffer the page carried in the data write request, and store the page identifier.

A manner in which the computing node 110 stores the page and the page identifier in the memory 112 is not limited in this embodiment of this application. The following lists two possible manners.

Manner 1: In the memory 112 of the computing node 110, the computing node 110 may set a page buffer area and an identifier buffer area, where the page buffer area is used to buffer the page, and the identifier buffer area is used to buffer the page identifier. Adjacent relationships of pages in the page buffer area are the same as adjacent relationships of page identifiers of the pages in the identifier buffer area. For example, if the pages in the page buffer area are sequentially a page 1, a page 2, and a page 3 based on storage locations, the page identifiers of the pages in the identifier buffer area are sequentially a page identifier of the page 1, a page identifier of the page 2, and a page identifier of the page 3 based on the storage locations.

Manner 2: In the memory 112 of the computing node 110, the computing node 110 may store the page identifier and the page in an adjacent manner. For example, in the memory 112 of the computing node 110, a page identifier of each page is stored at a location before the page.

Step 303: The computing node 110 migrates the page buffered in the memory 112 to the storage node 100.

For the computing node 110, storage space of the memory 112 is limited, and the page cannot be stored in the memory 112 of the computing node 110 for a long time. The computing node 110 may periodically migrate the page buffered in the memory 112 to the storage node 100. Alternatively, the computing node 110 may migrate, when an amount of data buffered in the memory 112 reaches a first specific value or idle storage space in the memory 112 is less than a second specific value, the page buffered in the memory 112 to the storage node 100.

When the computing node 110 performs step 303, the computing node 110 may send a data write instruction to the storage node 100. The data write instruction carries a page that needs to be migrated and a page identifier of the page.

For the storage node 100, after receiving the data write instruction, the storage node 100 may directly make the page carried in the data write instruction persistent to a hard disk 103. Alternatively, the storage node 100 may first buffer the page in a memory 1012 of the storage node 100, and when a data amount of the page in the memory 1012 of the storage node 100 reaches a threshold, make the page in the memory 1012 of the storage node 100 persistent to the hard disk 103. A manner in which the storage node 100 buffers the page in the memory 1012 of the storage node 100 is similar to the manner in which the computing node 110 buffers the page in the memory 112 of the computing node 110. For details, refer to related descriptions in step 302. Details are not described herein again.

When migrating pages to the storage node 100, the computing node 110 may migrate, in batches to the storage node 100, pages belonging to a same logical chunk group. The computing node 110 may determine, by parsing a page identifier of each to-be-migrated page, a logical chunk group to which each page belongs and an adjacent relationship between the pages belonging to the same logical chunk group. The computing node 110 may include, in the data write instruction based on the adjacent relationship, the pages belonging to the same logical chunk group and the page identifiers.

The following describes a process in which the storage node 100 makes the page persistent to the hard disk 103.

Because the page identifier of the page carries the logical chunk group identifier and the offset, the page identifier essentially points to a storage location of the page.

The storage node 100 can determine the logical chunk group identifier and the offset by parsing the page identifier, in other words, can determine the storage location. The storage node 100 may store the page at the storage location. Specifically, the storage node 100 may send a write instruction to the hard disk 103. The write instruction carries a page that needs to be made persistent to the hard disk 103 and a logical address of the page. The logical address of the page indicates a logical chunk group identifier and an offset. Therefore, the logical address of the page may be replaced with a page identifier. After receiving the write instruction, the hard disk 103 determines a physical block address (physical block address, PBA) of the page based on the logical address of the page, and writes the page into a location indicated by the physical block address.

If the logical chunk group has a redundancy mode (for example, a redundancy mode like a multi-copy or EC mode), the storage location may be mapped to physical storage space of different hard disks 103, and the storage node 100 may write the page into the different hard disks 103 based on the redundancy mode. Specifically, the storage node 100 may send a write instruction to the different hard disks 103, and the write instruction carries data that needs to be made persistent to the hard disk 103 and the logical address of the page. For the multi-copy mode, data that is made persistent to the hard disk 103 is the page. For the EC mode, the data that is made persistent into the hard disk 103 is a data fragment or a check fragment formed by the page. After receiving the write instruction, the hard disk 103 determines a PBA of the page based on the logical address of the page, and writes the data into a location indicated by the physical block address.

For the storage node 100, because the page identifier of the page already carries the logical chunk group identifier and the offset actually, in the process in which the storage node 100 makes the page persistent to the hard disk 103, the storage node 100 stores the page in the hard disk 103 based on the page identifier of the page. The storage node 100 does not need to establish a mapping relationship between the page identifier and the storage location (where the storage location is the logical chunk group identifier and the offset), in other words, does not need to establish a data index. It can avoid occupying storage space of the storage node 100 by the data index. In addition, because the step of establishing the data index is omitted, the storage node 100 can efficiently make the page persistent to the hard disk 103.

After the page is written into the storage system, the computing node 110 may further read the page.

Step 304: The computing node 110 determines a page identifier of a page that currently needs to be read.

The user sends a request to the computing node 110 by using the application server, to read data from the storage system. The application program deployed on the computing node 110 determines, by parsing the request, the page that needs to be read, and determines the page identifier of the page that needs to be read.

For the application program deployed on the computing node 110, the application program deployed on the computing node 110 has specific processing logic, and can determine, by analyzing the request, the page to which the read data belongs, to determine the page identifier of the page. A manner in which the computing node 110 determines the page identifier is not limited in this embodiment of this application.

Step 305: The computing node 110 searches the memory 112 of the computing node 110 for the page based on the page identifier, and if the page is found in the memory 112 of the computing node 110, the computing node 110 feeds back the hit page to the application program.

It can be learned from step 301 to step 303 that the page in the storage system may be stored in the memory of the computing node, the memory 1012 of the storage node 100, or the hard disk 103 of the storage node 100. After the computing node 110 receives a data read request, the computing node 110 may preferentially determine whether the page is stored in the memory 112 of the computing node 110.

The computing node 110 searches the memory 112 for the page based on the page identifier. When the computing node 110 buffers the page in the manner 1 mentioned in step 302, the computing node 110 may traverse page identifiers in the identifier buffer area to determine whether the page identifier in the data read request exists in the identifier buffer area. If the page identifier exists in the identifier buffer area, the page is stored in the memory 112 of the computing node 110. The computing node 110 may determine, based on a location that is in the identifier buffer area and that is of the page identifier that needs to be read, a location that is in the page buffer area and that is of the page that needs to be read, to obtain the page from the page buffer area. If the page identifier does not exist in the identifier buffer area, the page is not stored in the memory 112 of the computing node 110, and the computing node 110 needs to perform step 305.

When the computing node 110 buffers the page in the manner 2 mentioned in step 302, the computing node 110 may sequentially traverse page identifiers of all pages. If a traversed page identifier is consistent with the page identifier of the page that needs to be read, the page having the page identifier is stored in the memory 112 of the computing node 110, and the computing node 110 may obtain the page from a storage location after the traversed page identifier. If the page identifier does not exist in the identifier buffer area, the page is not stored in the memory 112 of the computing node 110, and the computing node 110 needs to perform step 305.

Step 306: If the page is not found in the memory 112 of the computing node 110, the computing node 110 initiates a data read instruction to the storage node 100, where the data read instruction carries the page identifier.

If the page is not found in the memory 112 of the computing node 110, it indicates that the page is stored in the storage node 100. The computing node 110 may request the page from the storage node 100 by sending the data read instruction.

Step 307: After receiving the data read instruction, the storage node 100 searches the memory 1012 of the storage node 100 for the page based on the page identifier. A manner in which the storage node 100 searches the memory 1012 of the storage node 100 for the page based on the page identifier is similar to the manner in which the computing node 110 searches the memory 112 for the page based on the page identifier. For details, refer to related descriptions in step 304. Details are not described herein again.

Step 308: If the page is not found in the memory 1012 of the storage node 100, the storage node 100 determines the logical chunk group identifier and the offset based on the page identifier, and obtains the page from the hard disk 103 based on the logical chunk group identifier and the offset.

If the page is not found in the memory 1012 of the storage node 100, it indicates that the page is already stored in the hard disk 103, and the storage node 100 may directly parse the page identifier to obtain the logical chunk group identifier and the offset from the page identifier. The storage node 100 reads the page from the storage location to which the logical chunk group identifier and the offset point. Specifically, the storage node 100 may send a read instruction to the hard disk 103. The read instruction carries a page that needs to be made persistent to the hard disk 103 and a logical address of the page. The logical address of the page indicates a logical chunk identifier and an offset. Therefore, the logical address of the page may be replaced with a page identifier. After receiving the read instruction, the hard disk 103 determines a PBA of the page based on the logical address of the page, and reads the page from a location indicated by the physical block address.

In a process in which the storage node 100 obtains the page from the hard disk 103, the storage node 100 may determine an address of the storage location (that is, the logical chunk group identifier and the offset) by parsing the page identifier. The storage node 100 does not need to query a data index, so that the storage node 100 can quickly obtain the page from the hard disk 103, to improve data reading efficiency.

Step 309: The storage node 100 feeds back the page to the computing node 110.

After step 306 or step 307, the storage node 100 may obtain the page. After obtaining the page, the storage node 100 feeds back the page to the computing node 110.

For any storage decoupled storage system, a cluster of storage nodes 100 may form a three-layer architecture or a two-layer architecture in terms of logical functions. The following separately describes the three-layer architecture and the two-layer architecture.

### 1. Three-layer architecture

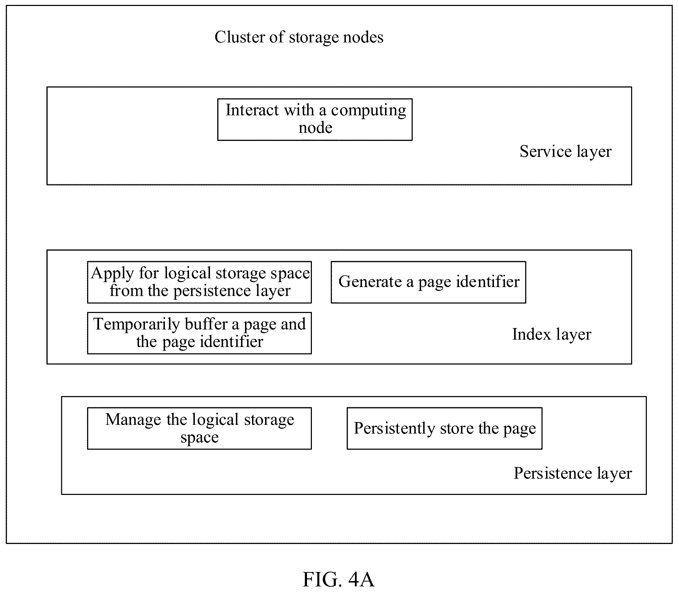

FIG. 4A is a diagram of a logical architecture of a cluster of storage nodes according to an embodiment of this application. The logical architecture includes a service layer, an index layer, and a persistence layer.

In this embodiment of this application, the service layer is configured to interact with a computing node 110, for example, receive an instruction (for example, a data write instruction, a page application request, or a data read instruction) from the computing node 110, or feed back, to the computing node 110, a read page or a page identifier that is generated by the storage node 100.

The index layer can apply for storage space from the persistence layer, and obtain an address of the storage space. In this embodiment of this application, the address of the storage space may be represented by using a logical chunk group identifier and an offset. The index layer is further configured to: address a logical chunk group and the offset as a page identifier, and upload the generated page identifier to the service layer. The index layer is further configured to temporarily buffer a page and a page identifier that are from the computing node 110, and may further temporarily buffer a page that needs to be fed back to the computing node 110.

The persistence layer manages page-level storage space, and the persistence layer can provide the page-level storage space for the index layer upon application of the index layer. The persistence layer is further configured to persistently store the page.

In step 300, the computing node 110 may send the page application request to the storage node 100. For the cluster of storage nodes 100, after receiving the page application request, the service layer may send the page application request to the index layer, and then the index layer transmits the page application request to the persistence layer. The persistence layer may apply for one or more segments of storage space, and return an address of the one or more segments of storage space to the index layer.

After obtaining the address of the storage space, the index layer addresses the logical chunk group and the offset as a page identifier, and feeds back the page identifier to the computing node 110 through the service layer.

In step 303, after the service layer receives the page and the page identifier from the computing node 110, the service layer transmits the page and the page identifier to the index layer, and the index layer may temporarily buffer the page and the page identifier. Then, if a data amount of the page buffered at the index layer reaches a specific amount, the index layer migrates the buffered page and the buffered page identifier to the persistence layer. The persistence layer determines the address of the storage space based on the page identifier of the page obtained from the index layer, and stores the page in the storage space. If the persistence layer has the redundancy mode like the multi-copy or EC mode, the persistence layer may further write the page to different hard disks 103 to which the storage space is mapped.

After writing the page, the persistence layer notifies the index layer that the page is successfully written, and the index layer may release the storage space occupied by a page buffer.

In step 306 and step 307, the service layer receives the data read instruction from the computing node 110, and the service layer transmits the data read instruction to the index layer. The index layer queries, based on the page identifier, the page buffered at the index layer, and determines whether the page that needs to be read is buffered at the index layer. If the page that needs to be read is buffered at the index layer, the index layer may feed back, to the service layer, the page that needs to be read, and then the service layer feeds back the page to the computing node 110. If the page that needs to be read is not buffered at the index layer, the index layer sends the page identifier to the persistence layer. The persistence layer parses the address of the storage space based on the page identifier, reads the page from the logical storage space, and sends the page to the service layer through the index layer. Then, the service layer feeds back the page to the computing node 110.

### 2. Two-layer architecture

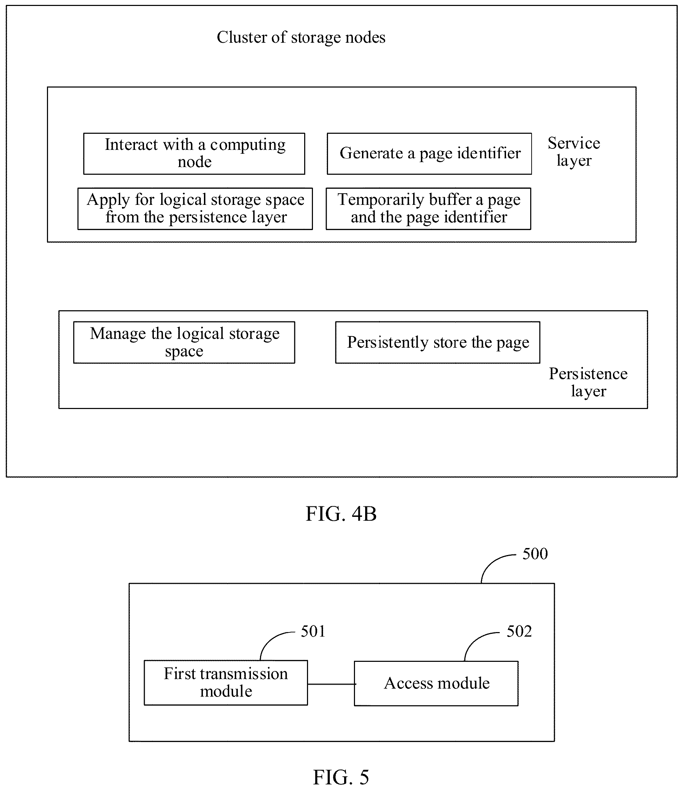

FIG. 4B is a diagram of a logical architecture of a cluster of storage nodes according to an embodiment of this application. The logical architecture includes a service layer and a persistence layer.

A difference from the logical architecture shown in FIG. 4A lies in that an index layer is omitted in the two-layer architecture, and the service layer in the two-layer architecture has functions of both the service layer and the index layer in the three-layer architecture. Functions of the service layer and the persistence layer in the two-layer architecture are not described herein again. For details, refer to related descriptions of the three-layer architecture.

Based on a same inventive concept as the method embodiment, an embodiment of this application further provides a data access apparatus. The data access apparatus is configured to perform the method performed by the storage node in the method embodiment shown in FIG. 3. For related features, refer to the foregoing method embodiment. Details are not described herein again. As shown in FIG. 5, the data access apparatus 500 includes a first transmission module 501 and an access module 502.

The first transmission module 501 is configured to receive an access instruction sent by a computing node, where the access instruction carries a page identifier of a target page.

The access module 502 is configured to: parse out a logical chunk group identifier and an offset from the page identifier of the target page, where the offset indicates a location of the target page in a logical chunk group, and the logical chunk group is a minimum allocation unit in page-level storage space provided by a hard disk of a storage node to the computing device; and access the target page based on the storage location to which the logical chunk group identifier and the offset point.

In a possible implementation, the access instruction is a data read instruction, and the data read instruction is used to request to read the target page. When accessing the target page, the access module 502 reads the target page based on the storage location to which the logical chunk group identifier and the offset point, and feeds back the target page to the computing node.

In a possible implementation, the access instruction is a data write instruction, the data write instruction is used to request to write the target page, and the data write instruction further carries the target page. When accessing the target page, the access module 502 writes the target page into the storage location to which the logical chunk group identifier and the offset point.

In a possible implementation, the first transmission module 501 receives a page application request sent by the computing node, where the target page application request is used to request to obtain the page identifier of the target page. The access module 502 addresses the logical chunk group identifier and the offset as the page identifier of the target page. The first transmission module 501 feeds back the page identifier of the target page to the computing node.

In a possible implementation, the logical chunk group is a PLOG, and the logical chunk group identifier is a PLOG identifier.

In a possible implementation, the data write instruction carries pages that belong to a same logical chunk group and that are buffered in a memory of the computing node and page identifiers of the pages, and the pages belonging to the same logical chunk group includes the target page.

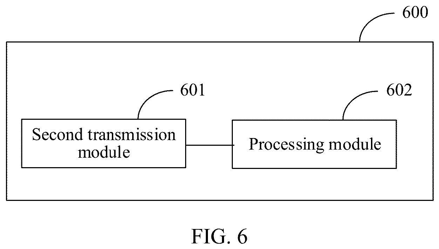

Based on the same inventive concept as the method embodiment, an embodiment of this application further provides a data access apparatus. The data access apparatus is configured to perform the method performed by the computing node in the method embodiment shown in FIG. 3. For related features, refer to the foregoing method embodiment. Details are not described herein again. As shown in FIG. 6, the data access apparatus 600 includes a second transmission module 601, and optionally, further includes a processing module 602.

The second transmission module 601 is configured to send an access instruction to a storage node, where the access instruction carries a page identifier of a target page, the page identifier of the target page includes a logical chunk group identifier and an offset, and the offset indicates a location of the target page in a logical chunk group, where a hard disk in the storage node provides page-level storage space for a computing node, and the logical chunk group is a minimum allocation unit in the page-level storage space.

In a possible implementation, the access instruction is a data read instruction, and the data read instruction is used to request to read the target page; or the access instruction is a data write instruction, and the data write instruction is used to request to write the target page, and the data write instruction further carries the target page.

In a possible implementation, when the target page needs to be read, the processing module 602 finds the target page in a memory of the computing node based on the page identifier of the target page; and if the processing module 602 does not find the target page in the memory, the second transmission module 601 sends the data read instruction to the storage node.

In a possible implementation, the second transmission module 601 sends a page application request to the storage node, where the target page application request is used to request to obtain the page identifier of the target page; and obtains the page identifier of the target page fed back by the storage node. The processing module 602 allocates the page identifier to the target page.

In a possible implementation, the logical chunk group is a PLOG, and the logical chunk group identifier is a PLOG identifier.

In a possible implementation, the data write instruction carries pages that belong to a same logical chunk group and that are buffered in the memory of the computing node and page identifiers of the pages, and the pages belonging to the same logical chunk group includes the target page.

It should be noted that, in embodiments of this application, module division is an example, and is merely a logical function division. In an actual implementation, another division manner may be used. Functional modules in embodiments of this application may be integrated into one processing module, or each of the modules may exist alone physically, or two or more modules are integrated into one module. The integrated module may be implemented in a form of hardware, or may be implemented in a form of a software functional module.

All or some of the foregoing embodiments may be implemented by using software, hardware, firmware, or any combination thereof. When the software is used to implement the embodiments, the foregoing embodiments may be implemented completely or partially in a form of a computer program product. The computer program product includes one or more computer instructions. When the computer program instructions are loaded and executed on a computer, all or some of the procedures or functions according to embodiments of the present invention are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this case, if the modifications and variations made to this application fall within the scope of the claims of this application and equivalent technologies thereof, this application is intended to cover these modifications and variations.

## Claims

1. A storage system, wherein the storage system comprises a computing node and a storage node, wherein a hard disk in the storage node provides page-level storage space for the computing node, and a minimum allocation unit in the page-level storage space is a logical chunk group, wherein
the computing node is configured to send an access instruction to the storage node, wherein the access instruction carries a page identifier of a target page; and
the storage node is configured to: receive the access instruction, and parse out a logical chunk group identifier and an offset from the page identifier of the target page, wherein the offset indicates a location of the target page in a logical chunk group identified by the logical chunk group identifier; and access the target page based on the storage location to which the logical chunk group identifier and the offset point.

2. The system according to claim 1, wherein the access instruction is a data read instruction, the data read instruction is used to request to read the target page, and when accessing the target page based on the storage location to which the logical chunk group identifier and the offset point, the storage node is configured to:
read the target page based on the storage location to which the logical chunk group identifier and the offset point, and feed back the target page to the computing node.

3. The system according to claim 1, wherein the access instruction is a data write instruction, the data write instruction is used to request to write the target page, the data write instruction further carries the target page, and when accessing the target page based on the storage location to which the logical chunk group identifier and the offset point, the storage node is configured to:
write the target page into the storage location to which the logical chunk group identifier and the offset point.

4. The system according to claim 2, wherein before the computing node sends the data read instruction to the storage node, the computing node is further configured to:
when the target page needs to be read, the target page is not found in a memory of the computing node based on the page identifier of the target page.

5. The system according to any one of claims 1 to 4, wherein the computing node is further configured to:
send a page application request to the storage node, wherein the target page application request is used to request to obtain the page identifier of the target page;
obtain the page identifier of the target page fed back by the storage node; and
allocate the page identifier to the target page.

6. The system according to claim 5, wherein the storage node is further configured to: after receiving the page application request, address the logical chunk group identifier and the offset as the page identifier of the target page, and feed back the page identifier of the target page to the computing node.

7. The system according to any one of claims 1 to 6, wherein the logical chunk group is an append only log, PLOG, and the logical chunk group identifier is a PLOG identifier.

8. The system according to any one of claims 3 to 7, wherein the data write instruction carries pages that belong to a same logical chunk group and that are buffered in the memory of the computing node and page identifiers of the pages, and the pages belonging to the same logical chunk group comprise the target page.

9. A data access method, wherein the method comprises:
sending, by a computing node, an access instruction to a storage node, wherein the access instruction carries a page identifier of a target page;
receiving, by the storage node, the access instruction, and parsing out a logical chunk group identifier and an offset from the page identifier of the target page, wherein the offset indicates a location of the target page in a logical chunk group identified by the logical chunk group identifier, a hard disk in the storage node provides page-level storage space for the computing node, and the logical chunk group is a minimum allocation unit in the page-level storage space; and
accessing, by the storage node, the target page based on the storage location to which the logical chunk group identifier and the offset point.

10. The method according to claim 9, wherein the access instruction is a data read instruction, the data read instruction is used to request to read the target page, and accessing, by the storage node, the target page based on the storage location to which the logical chunk group identifier and the offset point comprises:
reading, by the storage node, the target page based on the storage location to which the logical chunk group identifier and the offset point, and feeding back the target page to the computing node.

11. The method according to claim 9, wherein the access instruction is a data write instruction, the data write instruction is used to request to write the target page, the data write instruction further carries the target page, and accessing, by the storage node, the target page based on the storage location to which the logical chunk group identifier and the offset point comprises:
writing, by the storage node, the target page into the storage location to which the logical chunk group identifier and the offset point.

12. The method according to claim 10, wherein before sending the data read instruction to the storage node by the computing node, the method further comprises:
when the target page needs to be read, the target page is not found in a memory of the computing node based on the page identifier of the target page.

13. The method according to any one of claims 9 to 12, wherein the method further comprises:
sending, by the computing node, a page application request to the storage node, wherein the target page application request is used to request to obtain the page identifier of the target page;
obtaining, by the computing node, the page identifier of the target page fed back by the storage node; and
allocating, by the computing node, the page identifier to the target page.

14. The method according to claim 13, wherein the method further comprises:
after receiving the page application request, addressing, by the storage node, the logical chunk group identifier and the offset as the page identifier of the target page, and feeding back the page identifier of the target page to the computing node.

15. The method according to any one of claims 9 to 14, wherein the logical chunk group is an append only log PLOG, and the logical chunk group identifier is a PLOG identifier.

16. The method according to any one of claims 11 to 15, wherein the data write instruction carries pages that belong to a same logical chunk group and that are buffered in the memory of the computing node and page identifiers of the pages, and the pages belonging to the same logical chunk group comprise the target page.

17. A data access apparatus, wherein the data access apparatus comprises:
a first transmission module, configured to receive an access instruction sent by a computing node, wherein the access instruction carries a page identifier of a target page;
an access module, configured to: parse out a logical chunk group identifier and an offset from the page identifier of the target page, wherein the offset indicates a location of the target page in a logical chunk group identified by the logical chunk group identifier, a hard disk in the storage node provides page-level storage space for the computing node, and the logical chunk group is a minimum allocation unit in the page-level storage space; and access the target page based on the storage location to which the logical chunk group identifier and the offset point.

18. The apparatus according to claim 17, wherein the access instruction is a data read instruction, the data read instruction is used to request to read the target page, and the access module is configured to:
read the target page based on the storage location to which the logical chunk group identifier and the offset point, and feed back the target page to the computing node.

19. The apparatus according to claim 17, wherein the access instruction is a data write instruction, the data write instruction is used to request to write the target page, the data write instruction further carries the target page, and the access module is configured to:
write the target page into the storage location to which the logical chunk group identifier and the offset point.

20. The apparatus according to any one of claims 17 to 19, wherein the first transmission module is further configured to receive a page application request sent by the computing node, wherein the target page application request is used to request to obtain the page identifier of the target page;
the access module is further configured to address the logical chunk group identifier and the offset as the page identifier of the target page; and
the first transmission module is further configured to feed back the page identifier of the target page to the computing node.

21. The apparatus according to any one of claims 17 to 20, wherein the logical chunk group is an append only log PLOG, and the logical chunk group identifier is a PLOG identifier.

22. The apparatus according to any one of claims 19 to 21, wherein the data write instruction carries pages that belong to a same logical chunk group and that are buffered in a memory of the computing node and page identifiers of the pages, and the pages belonging to the same logical chunk group comprise the target page.

23. A computing device, wherein the computing device comprises a processor and a storage, the storage is configured to store computer program instructions, and the processor is configured to perform the method according to any one of claims 9 to 16.

24. A computer storage medium, wherein the computer-readable storage medium stores computer-executable instructions, and the computer-executable instructions are used to enable a computer to perform the method according to any one of claims 9 to 16.
